# EUROPÄISCHE PATENTANMELDUNG

(11) **EP 1 422 801 A2**
(43) Veröffentlichungstag der Anmeldung: **26.05.2004**
(21) Anmeldenummer: 03026412.1
(22) Anmeldetag: 19.11.2003
(51) Int. Cl.: H02G 15/184, H02G 15/103, H02G 15/10

(54) **Kabelmuffe**

(30) Priorität: 22.11.2002 DE 10254507
(71) Anmelder: TECE Thews & Clüver GmbH, 28203 Bremen (DE)
(72) Erfinder: Schaefer, Ulrich, 24235 Laboe (DE)
(74) Vertreter: Möller, Friedrich, Dipl.-Ing.

(57) **Zusammenfassung**

Kabelmuffen im Mittelspannungsbereich weisen bislang Muffengehäuse (14) aus zusammengeschraubten gusseisernen Halbschalen auf. Dabei kann es zu Feldbündelungen kommen, wenn die zu verbindenden oder abzuzweigenden Kabel zu dicht an die gusseisernen Wandungen des Muffengehäuses (14) gelangen. Daraus resultieren mechanische Zerstörungen der Isolierung der Kabel. Außerdem sind die schwereren gusseisernen Kabelgehäuse (14) bei der Montage schwer handhabbar.

Erfindungsgemäß ist nun vorgesehen, die Kabelmuffe mit einem mehrwandigen Muffengehäuse (14) zu versehen, das vorzugsweise aus zwei konzentrischen Muffenrohren (15, 16) unterschiedlichen Durchmessers gebildet ist. Dadurch haben die Kabel stets einen Mindestabstand von mindestens dem äußeren Mantelrohr (16). Die Mantelrohre (15, 16) sind weiterhin aus Kunststoff gebildet und lassen sich dadurch leicht handhaben.

## Beschreibung

Die Erfindung betrifft eine Kabelmuffe gemäß dem Oberbegriff des Anspruchs 1.

Kabelmuffen der hier angesprochenen Art dienen dazu, unterirdisch verlegte elektrische Energieversorgungskabel zu verbinden. Solche Kabelmuffen sind universell einsetzbar für kunststoffisolierte Kabel und/oder Massekabel. Neben der reinen Verbindung solcher Kabel (die Kabelmuffen werden dann als Verbindungsmuffen bezeichnet) können die Kabelmuffen auch zur Abzweigung von Kabeln eingesetzt werden, beispielweise zur Abzweigung mehrerer kunststoffisolierter Kabel von einem Massekabel. In diesem letztgenannten Falle spricht man von Übergangsmuffen.

Bekannte Kabelmuffen dieser Art, insbesondere im Mittelspannungsbereich von 10 KV bis 20 KV, verfügen über ein Muffengehäuse, das aus zwei zusammenschraubbaren. Gehäusehalbschalen aus Gusseisen gebildet ist. Solche bekannten Kabelmuffen sind schwer und dadurch schwierig zu handhaben. Insbesondere erfordern die Kabelmuffen im Erdreich ein verhältnismäßig großes Loch. Das Zusammenschrauben der Halbschalen ist insbesondere aufgrund ihres Gewichts zeitaufwendig. Darüber hinaus lassen sich die aus Gusseisen gebildeten Kabelmuffen nicht universell einsetzen. Ein weiterer wesentlicher Nachteil der bekannten Kabelmuffen aus gusseisernen Halbschalen besteht darin, dass es nach dem üblichen Ausgießen des Inneren der Kabelmuffe mit Gießharz Stellen geben kann, in denen zwischen dem Kabel und dem Muffengehäuse nur wenig oder gar kein Gießharz vorhanden ist. Das führt beim Betrieb des Kabels im Bereich der Kabelmuffe zu Feldbündelungen, die insbesondere die Isolierung mechanisch zerstören, was mit der Zeit zur Unbrauchbarkeit einer solchen elektrischen Leitung führt.

Der Erfindung liegt nun die Aufgabe zugrunde, eine die Kabel zuverlässig und störungsfrei verbindende Kabelmuffe zu schaffen, die unkompliziert montierbar ist.

Eine Kabelmuffe zur Lösung dieser Aufgabe weist die Merkmale des Anspruchs 1 auf. Eine solche Kabelmuffe, wobei es sich um eine Verbindungsmuffe oder auch eine Übergangsmuffe handeln kann, mit einem mehrwandigen Muffengehäuse gewährleistet, dass die Verbindungs- oder Abzweigstelle der Kabel vollständig von Gießharz mit einer Mindestschichtdicke umgeben ist. Dadurch können Beeinträchtigungen beim Betrieb des Kabels, insbesondere Feldbündelungen, und die dadurch hervorgerufenen Beschädigungen nicht mehr auftreten.

Vorzugsweise ist das mehrwandige Muffengehäuse aus mindestens zwei Muffenrohren unterschiedlichen Durchmessers gebildet. Solche Muffenrohre lassen sich einfach herstellen, und zwar insbesondere aus Kunststoff, bei dem es sich vorzugsweise um einen schlagfesten thermoplastischen Kunststoff handelt. Diese Muffenrohre sind leicht und lassen sich einfach auch in einem kleinen Erdloch montieren. Die Muffenrohre lassen außerdem einen universellen Einsatz der erfindungsgemäßen Kabelmuffe zu, und zwar sowohl als Verbindungsmuffe oder auch als Abweichmuffe. Es können mit solchen Kabelmuffen Verbindungen oder Abzweigungen unterschiedlicher Kabeltypen und Querschnitte in einem größeren Spannungsbereich, insbesondere 10 KV und 20 KV, hergestellt werden.

Gemäß einer bevorzugten Ausgestaltung der Erfindung ist das im Durchmesser kleinere (innere) Muffenrohr im größere (äußeren) Muffenrohr angeordnet. Dadurch ist das kleinere Muffenrohr vom größeren Muffenrohr vollständig umgeben. Es entsteht zwischen dem inneren und dem äußeren Muffenrohr ein umlaufender Spalt mit einem Ringraum, der zwischen dem äußeren und dem inneren Muffenrohr zu Zwischenräumen führt, die überall eine Mindestgröße aufweisen. Nachdem diese Zwischenräume mit Gießharz gefüllt sind, ist die Kabelverbindung vollständig von Gießharz mit einer ausreichenden Schichtdicke umgeben, wodurch die eingangs genannten Nachteile bekannter Muffengehäuse aus Gusseisen zuverlässig und dauerhaft ausgeräumt werden.

Es ist des Weiteren vorgesehen, das innere Muffenrohr kürzer als das äußere Muffenrohr auszubilden. Dadurch sind die Stirnseiten des inneren Muffenrohrs beabstandet von den Stirnseiten des größeren äußeren Muffenrohrs, so dass über die offenen Stirnseiten des inneren Muffenrohrs Gießharz vom Ringraum zwischen den Muffenrohren in das innere Muffenrohr gelangen kann und dadurch auch dieses zuverlässig ausgegossen wird, insbesondere wenn gemäß einer weiteren bevorzugten Ausgestaltung der Erfindung das innere Muffenrohr mit Öffnungen, beispielsweise Entlüftungslöchern, in seiner Mantelfläche versehen ist. Dadurch, dass das innere Muffenrohr kürzer ist als das äußere Muffenrohr, wird an gegenüberliegenden Stirnseiten des äußeren Muffenrohrs auch Platz für Dichtungen geschaffen, die die Kabel, insbesondere ihre äußeren Isolierungen, nur an den Stirnseiten des äußeren Muffenrohrs abdichten müssen. Trotz der doppelwandigen Ausbildung des Muffengehäuses werden auf diese Weise wie bei bekannten Kabelmuffen auch nur zwei Dichtungen an gegenüberliegenden Enden der Kabelmuffe, und zwar an gegenüberliegenden Stirnseiten des äußeren Kabelrohrs, erforderlich.

Gemäß einer bevorzugten Ausgestaltung der erfindungsgemäßen Kabelmuffen sind die Muffenrohre, und zwar vorzugsweise beide Muffenrohre, aufklappbar ausgebildet. Die Muffenrohre können dadurch entlang einer in ihrer Längsrichtung durchgehenden Trennnaht geöffnet werden. Dadurch lässt sich das innere Muffenrohr nach dem Verbinden der Kabel um die mechanische Verbindungsstelle herumlegen. Anschließend kann auch das äußere Mantelrohr um das innere Mantelrohr herumgelegt werden. Damit dabei die Mantelrohre stets einen Mindestabstand zueinander erhalten, ist weiterhin vorgesehen, Abstandshalter zwischen den Muffenrohren anzuordnen, wodurch der umlaufend und über die Länge der Kabelmuffe durchgehend verlaufende Ringspalt zwischen den beiden Muffenrohren entsteht. Beim Herumlegen des äußeren Muffenrohrs um das innere Muffenrohr wird dadurch das äußere Muffenrohr gleichmäßig vom inneren Muffenrohr beabstandet und dieser Abstand von den Abstandshaltern dauerhaft fixiert. Die Abstandshalter sind des Weiteren so ausgebildet, dass sie den Spalt zwischen den Muffenrohren nur teilweise ausfüllen, so dass Gießharz längs durch den Ringraum zwischen den Muffenrohren hindurchfließen kann.

Es ist weiterhin vorgesehen, jedes Muffenrohr aus mindestens zwei Muffenrohrteilen zu bilden. Die Muffenrohrteile sowohl des inneren Muffenrohrs als auch des äußeren Muffenrohrs sind entweder lösbar miteinander verbunden, so dass sie sich aus völlig voneinander getrennten Muffenrohrteilen zusammensetzen oder es sind benachbarte, zusammengehörige Muffenrohrteile durch mindestens ein Scharnier, vorzugsweise eine in Längsrichtung der Muffenrohre durchgehend verlaufende Scharnierlinie, beispielsweise ein Filmscharnier, auf- und zusammenklappbar miteinander verbunden. Insbesondere im letztgenannten Falle lassen sich die Muffenrohrteile leicht öffnen zum Herumlegen um die Kabelverbindung oder das innere Muffenrohr, wobei durch die Verbindung der Muffenrohrteile an den Schamierlinien die Muffenrohre als Einheit leicht handhabbar sind. Andere Längsränder der Muffenrohrteile jedes Muffenrohrs weisen mindestens einen lösbaren Verschluss auf. Vorzugsweise erstreckt sich der jeweilige Verschluss auch durchgehend in Längsrichtung des jeweiligen Muffenrohrs. Der Verschluss kann integraler Bestandteil des jeweiligen Muffenrohrs, insbesondere des inneren Rohrs, sein, aber auch durch separate Verschlussteile, insbesondere des äußeren Muffenrohrs, gebildet werden. Durch den jeweiligen Verschluss lassen sich die Muffenrohre nach dem Herumlegen um die Kabel bzw. das innere Muffenrohr schließen, so dass sich aus den Muffenrohrteilen die einen geschlossenen Mantel aufweisenden Mantelrohre bilden lassen. Auf diese Weise lässt sich das Muffengehäuse aus den Muffenrohren bzw. den Muffenrohrteilen ohne irgendwelche Schrauben schnell und unkompliziert montieren. Der Verschluss des äußeren Mantelrohrs ist in besondere Weise ausgebildet. Dieser Verschluss lässt eine Teilschließstellung zu, in der die Mantelrohrteile des äußeren Mantelrohrs zwar zusammengehalten werden zum statisch geschlossenen äußeren Mantelrohr, aber mindestens eine Öffnung im Bereich des Verschlusses an der Oberseite des äußeren Mantelrohrs verbleibt, in die Gießharz einfüllbar ist. Erst nachdem das Muffengehäuse vollständig mit Gießharz ausgefüllt ist, wird der Verschluss vollständig geschlossen, so dass auch die oder jede Gießöffnung beseitigt ist und das äußere Mantelrohr ringsherum über die ganze Länge geschlossen ist.

Es ist weiterhin vorgesehen, mindestens das innere Mantelrohr mit einer Abschirmung zu versehen. Die Abschirmung ist vorzugsweise auf die Außenfläche des inneren Mantelrohrs aufgebracht, und zwar so, dass sie sich über die gesamte Außenfläche des inneren Mantelrohrs erstreckt. Die Abschirmung kann spiralförmig um die äußere Mantelfläche des inneren Mantelrohrs herumgewickelt sein, und zwar so, dass sie das gesamte innere Mantelrohr von außen überdeckt. Die dann praktisch als Bandage ausgebildete Abschirmung kann aus einem metallischen Drahtgewebe oder auch einem biegsamen Drahtgitter gebildet sein. Die Abschirmung verhindert elektrische Störeinflüsse von außen und den Austritt elektromagnetischer Wellen aus der Kabelmuffe, die von den zur Verbindung der Kabel freigelegten Kabelenden austreten könnten. Die das innere Mantelrohr von außen vollständig umgebende Abschirmung befindet sich im Ringraum zwischen den beiden Muffenrohren und kann hier durch geeignete Fixierungsmittel, beispielsweise Kabelverbinder, fixiert sein. Nach dem Ausgießen der Kabelmuffe, wenn der Ringraum vollständig durch Gießharz ausgefüllt und dieses ausgehärtet ist, wird hierdurch die Abschirmung zuverlässig und dauerhaft fixiert.

Des Weiteren ist vorgesehen, mindestens einige leitende, aber nicht zur Energieübertragung dienende Komponenten des oder jedes Kabels, insbesondere die Kabelabschirmungen und/oder Armierungen elektrisch leitend zu verbinden. Diese Verbindung erfolgt vorzugsweise über mindestens einen Erdungsleiter. Der jeweilige Erdungsleiter ist lösbar mit Abschirmungen und/oder Armierungen der Kabel verbunden. Dabei überbrückt der jeweilige Erdungsleiter die Enden der verbundenen und/oder abzweigenden Kabel. Der mindestens eine Erdungsleiter ist in Bereichen der gegenüberliegenden Stirnseiten des inneren Muffenrohrs lösbar mit den Armierungen bzw. Abschirmungen der Kabel verbunden und außen am inneren Mantelrohr entlanggeführt. Vorzugsweise ist der Erdungsleiter entlang des inneren Mantelrohrs von der um dieses herumgewickelten Abschirmung umgeben und dadurch zwischen dem inneren Mantelrohr und der Abschirmung fixiert.

Nur die gegenüberliegenden Stirnseiten des äußeren Mantelrohrs sind gegenüber den Kabeln abgedichtet. Diese Abdichtung erfolgt so, dass zum Ausgießen der Kabelmuffe dienendes flüssiges Gießharz an den Stirnseiten des äußeren Muffenrohrs nicht aus dem Muffengehäuse der Kabelmuffe austreten kann. Die Abdichtung kann durch herkömmliches elastisches Dichtungsmaterial, insbesondere Schaumkunststoff und/oder gummielastische Abdichtungstüllen, erfolgen. Die Dichtungen sind so ausgebildet, dass sie universell an übliche Kabelquerschnitte, zu deren Verbindung oder Abzweigung die Kabelmuffe eingesetzt werden kann, anpassbar sind und gleichwohl eine zuverlässige Abdichtung gewährleisten.

Ein bevorzugtes Ausführungsbeispiel der erfindungsgemäßen Kabelmuffe wird nachfolgend anhand der Zeichnung näher erläutert. In dieser zeigen:
- Fig. 1: eine Gesamtansicht einer Kabelmuffe im mittigen Längsschnitt,
- Fig. 2: eine vergrößerte Darstellung einer rechten Hälfte der Fig. 1,
- Fig. 3: eine vergrößerte Darstellung einer linken Hälfte der Fig. 1, und
- Fig. 4: einen Querschnitt IV-IV durch die Kabelmuffe der Fig. 1 bis 3.

Bei der hier gezeigten Kabelmuffe handelt es sich um eine Übergangsmuffe 10. Die Übergangsmuffe 10 dient dazu, von einem Massekabel 11 der Typen NKBA bzw. NAKBA mehrere, im gezeigten Ausführungsbeispiel drei, Abzweigkabel 12 abzuzweigen. Bei den Abzweigkabeln 12 handelt es sich zum Beispiel um kunststoffisolierte Kabel der Typen NAYY. Das Massekabel 11 und die Abzweigkabel 12 sind im Erdreich verlegt, wobei die Übergangsmuffe 10 dazu dient, die Verbindungsstelle 13 der Abzweigkabel 12 mit dem Massekabel 11 zu schützen und dabei die zur Verbindung des Massekabels 11 mit den Abzweigkabeln 12 freigelegten Enden derselben zu umhüllen, und zwar zu isolieren, abzuschirmen und eine Masseleitung herzustellen.

Die Übergangsmuffe 10 weist ein Muffengehäuse 14 auf, das erfindungsgemäß mehrwandig, und zwar hier doppelwandig, ausgebildet ist. Dazu ist das Muffengehäuse 14 im gezeigten Ausführungsbeispiel aus zwei zylindrischen und jeweils einwandigen Muffenrohren 15 und 16 gebildet. Beide Muffenrohre 15 und 16 bestehen vollständig aus nichtleitendem Material, zum Beispiel Kunststoff, und zwar vorzugsweise aus einem thermoplastischen Kunststoff. Es können verschiedene Kunststofftypen zum Einsatz kommen, wobei bevorzugt schlagfeste thermoplastische Kunststoffe verwendet werden. Die jeweils zylindrischen Muffenrohre 15 und 16 verfügen über unterschiedliche Durchmesser unterschiedlicher Längen. Ein im Durchmesser kleines inneren Muffenrohr 15 ist etwa konzentrisch in einem im Durchmesser größeren äußeren Muffenrohr 16 angeordnet. Das äußere Muffenrohr 16 weist eine Länge auf, die größer ist als das kleinere innere Muffenrohr 15. Die Wandungen beider Muffenrohre 15 und 16 sind vollständig geschlossen.

Das Muffengehäuse 14 der Übergangsmuffe 10 wird nach der Montage vollständig mit Gießharz ausgefüllt. Diese Gießharzfüllung ist in den Figuren nicht gezeigt. Die folgende Beschreibung der Übergangsmuffe 10 bezieht sich - soweit nichts anderes ausdrücklich erwähnt ist - auf den noch nicht mit Gießharz ausgefüllten Zustand der Übergangsmuffe 10. Wenn demnach im Folgenden von Hohlräumen im Muffengehäuse 14 bzw. offenen Stirnseiten des Muffengehäuses 14 die Rede ist, bezieht sich das auf das noch nicht mit Gießharz ausgefüllte Muffengehäuse 14.

Gegenüberliegende Stirnseiten 17 des äußeren Muffenrohrs 16 sind mit jeweils einer Dichtung 18 abgedichtet. Die Dichtungen 18 sind so ausgebildet, dass beim Einfüllen des Gießharzes in das Muffengehäuse 14 das noch flüssige Gießharz über die Stirnseiten 17 nicht aus dem äußeren Muffenrohr 16 austreten kann. Die Stirnseiten 19 des inneren Muffenrohrs 15 sind offen. Dazu ist die Länge des inneren Muffenrohrs 15 so gebildet, dass die Stirnseiten 15 desselben mit Abstand vor den Innenseiten der Dichtungen 18 im Bereich der Stirnseiten 17 des äußeren Muffenrohrs 16 enden.

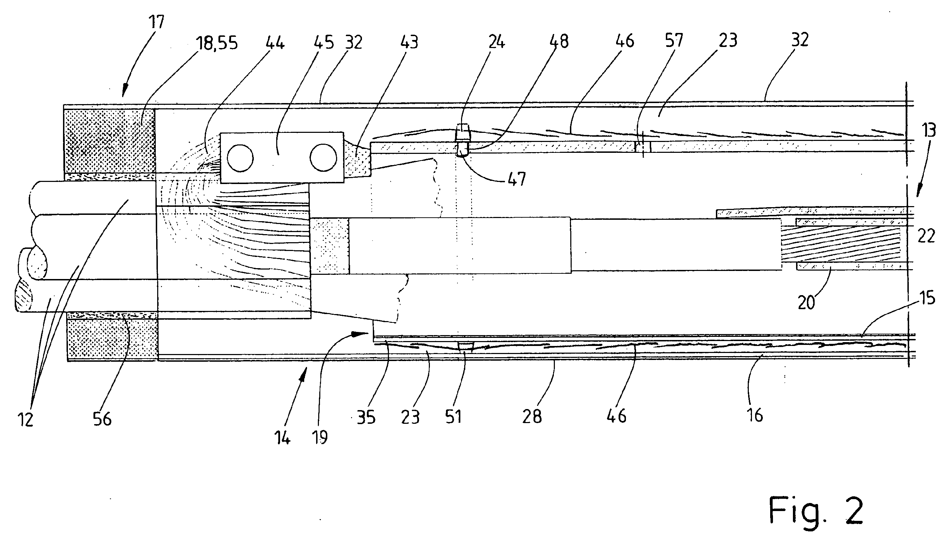

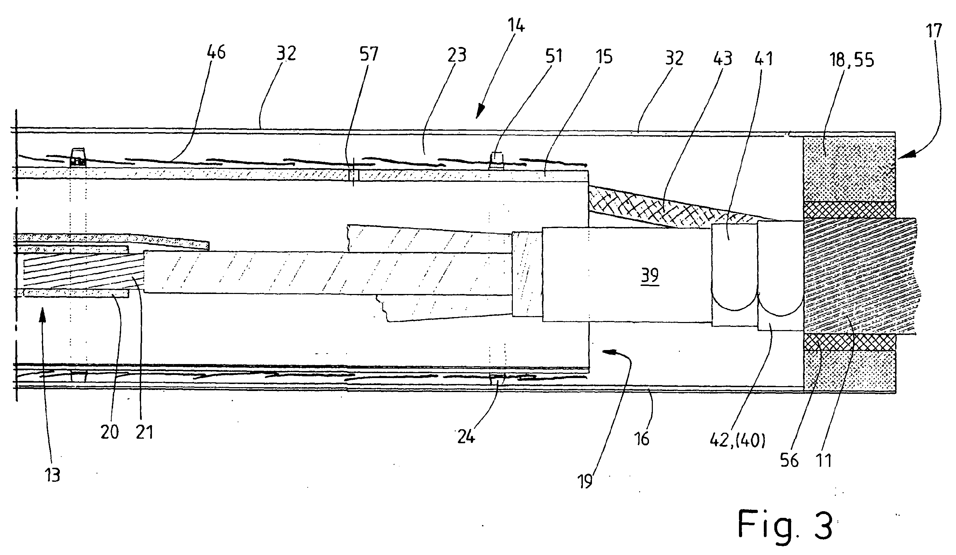

Im inneren Muffenrohr 15 befinden sich die in an sich bekannter Weise durch Kabelverbinder 20 verbundenen Enden des Massekabels 11 der Abzweigkabel 12. Die Kabelverbinder 20 sind den an den Enden des Massekabels 11 und des Abzweigkabels 12 freigelegten Leitern 21 derselben zugeordnet. Die Kabelverbinder 20 können dabei auf den Enden der Leiter 21 und 22 durch Schrauben oder Quetschen befestigt sein. Ein Endbereich des Massekabels 11 tritt an der in der Fig. 3 gezeigten rechten Seite über die offene Stirnseite 19 aus dem inneren Muffenrohr 15 aus. Demgegenüber treten die Endbereiche der drei Abzweigkabel 12 auf der gegenüberliegenden linken Seite (Fig. 2) aus der offenen Stirnseite 19 des inneren Muffenrohrs 15 heraus. Des Weiteren ist der Endbereich des Massekabels 11 an der rechten Seite der Übergangsmuffe 10 (Fig. 3) durch die Dichtung 18 aus dem äußeren Muffenrohr 16 herausgeführt. Die drei Abzweigkabel 12 verlaufen mit ihren Endbereichen durch die Dichtung 18 an der linken Stirnseite 17 des äußeren Muffenrohrs 16 (Fig. 2).

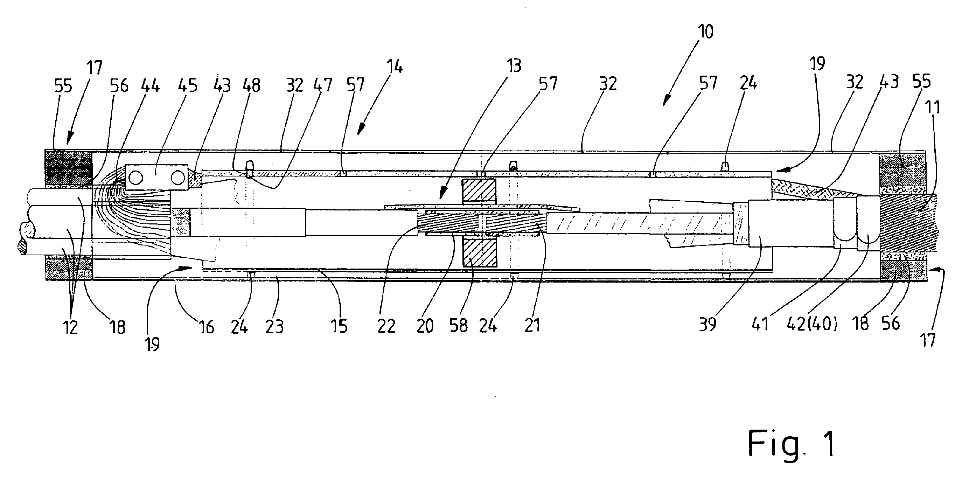

Das kleinere innere Muffenrohr 15 ist in etwa konzentrisch im Inneren des größeren äußeren Muffenrohrs 16 angeordnet, wobei die Durchmesser der Muffenrohre 15 und 16 so bemessen sind, dass zwischen ihnen ein umlaufender Spalt mit einer bestimmten Mindestdicke entsteht. Der Spalt verläuft durchgehend über die gesamte Länge des inneren Muffenrohrs 15. Auf diese Weise wird zwischen den Muffenrohren 15 und 16 ein Ringraum 23 gebildet. Bei noch nicht ausgegossenem Muffengehäuse 14 wird die etwa konzentrische Lage des inneren Muffenrohrs 15 im äußeren Muffenrohr 16 fixiert durch Abstandshalter 24. Im gezeigten Ausführungsbeispiel sind drei gleich ausgebildete in eine Ringform gebrachte Abstandshalter 24 zwischen den Muffenrohren 15 und 16 angeordnet. Die in den Fig. 1 bis 3 nicht gezeigten Abstandshalter 24 sind gegenüberliegenden Endbereichen und einem mittleren Bereich des inneren Muffenrohrs 15 zugeordnet.

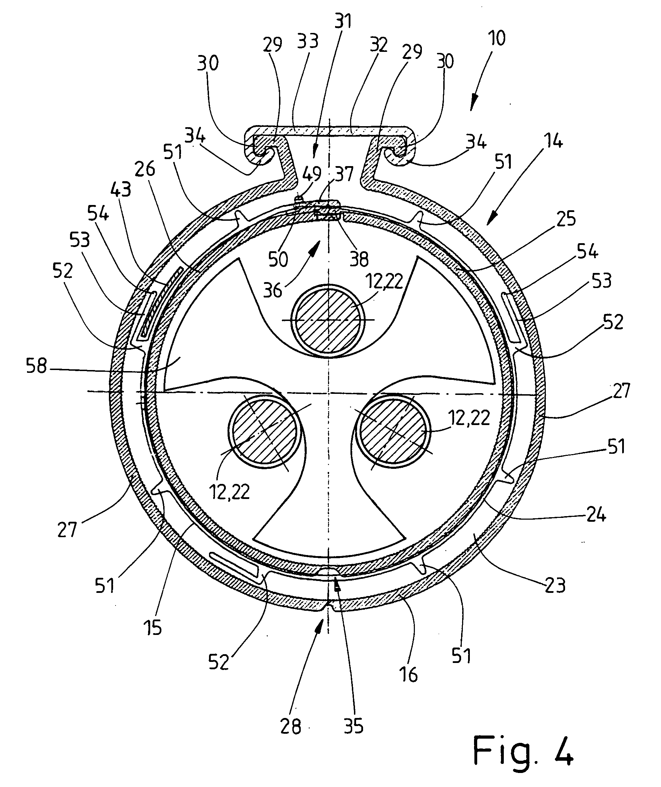

Beide Muffenrohre 15 und 16 sind so ausgebildet, dass sie sich in Längsrichtung zur Montage öffnen lassen. Dazu ist sowohl das innere Muffenrohr 15 als auch das äußere Muffenrohr 16 aus jeweils zwei Muffenrohrhälften 25, 26; 27 gebildet. Die Muffenrohrhälften 27 des äußeren Muffenrohrs 16 sind gleich ausgebildet. An der Unterseite des Muffengehäuses 14 sind die Muffenrohrhälften 27 durch ein Scharnier verbunden, das im gezeigten Ausführungsbeispiel als ein in Längsrichtung des äußeren Muffenrohrs 16 durchgehendes, gerades Filmscharnier 28 ausgebildet ist. Um das Filmscharnier 28 sind die Muffenrohrhälften 27 auf- und zuklappbar. In der Fig. 4 ist nur das zugeklappte, geschlossene Muffenrohr 16 dargestellt. Dieses lässt sich durch entsprechendes Verschwenken der Muffenrohrhälften 27 aber soweit öffnen, dass es in radialer Richtung von außen um das innere Muffenrohr 15 herumlegbar ist. Dem Filmscharnier gegenüberliegende, obere Längsränder 29 benachbarter Muffenhälften 27 des äußeren Muffenrohrs 16 sind mit durchgehenden Abwinklungen 30 versehen. Die gegensinnig gerichteten, im Übrigen aber gleichen Abwinklungen 30 verlaufen in Längsrichtung des Muffenrohrs 16 mit parallelem Abstand zueinander, so dass zwischen den Abwinklungen 30 benachbarter Muffenrohrhälften 27 ein in Längsrichtung des Muffengehäuses 14 durchgehender (gleichbreiter) Spalt 31 verbleibt, wenn bei montiertem Muffenrohr 16 die Muffenrohrhälften 27 zusammengeschwenkt sind (Fig. 4). Verbunden sind die mit Abstand zueinander verlaufenden Abwinklungen 30 an den freien Längsrändern 29 der Muffenrohrhälften 27 durch einen Verschlussschieber. Der Verschlussschieber weist einen ebenen, horizontalen Steg 33 auf, der an gegenüberliegenden Längsrändern, die parallel zu den Längsrändern 29 der Muffenrohrhälften 27 verlaufen, mit gleich ausgebildeten, spiegelbildlichen Haken 34 versehen ist. Die Haken 34 korrespondieren mit den Abwinklungen 30 an den Muffenrohrhälften 27, so dass das Verschlussschieberteil formschlüssig geführt in Längsrichtung des Muffenrohrs 16 verschiebbar ist. Im gezeigten Ausführungsbeispiel ist das Verschlussschieberteil mehrteilig ausgebildet, setzt sich nämlich aus drei sich etwa über ein Drittel der Länge des äußeren Muffenrohrs 16 erstreckende, im Wesentlichen gleichlange Verschlussschieberteile 32 zusammen. Die Verschlussschieberteile 32 des Verschlussschiebers halten die Muffenrohrhälften 27 bei geschlossenem Muffenrohr 16 formschlüssig zusammen. Vor dem Einfüllen des Gießharzes in das Muffengehäuse 14 ist mindestens ein Verschlussschieberteil 32 in eine Teilverschlussstellung gebracht, in der das betreffende Verschlussschieberteil 32 nicht vollständig auf die Längsränder 29 der Muffenrohrhälften 27 aufgeschoben ist. Es verbleibt dadurch an der Oberseite des Muffenrohrs 16 eine Öffnung zum Einfüllen fließfähigen Gießharzes. Nachdem das Gießharz vollständig in das Muffengehäuse 14 eingefüllt ist, wird das betreffende Verschlussschieberteil 32 vollständig über das Muffenrohr 16 geschoben und dadurch die jeweilige Öffnung geschlossen. Im gezeigten Ausführungsbeispiel sind drei gleiche Verschlussschieberteile 32 vorgesehen. Dadurch ist es möglich, durch teilweises Aufschieben zweier äußerer Verschlussschieberteile 32 auf das Muffenrohr 16 zwei gegenüberliegende Öffnungen zum Einfüllen fließfähigen Gießharzes zu belassen, wenn sich diese beiden Verschlussschieberteile 32 in der Teilschließstellung befinden. Auch die Verschlussschieberteile 32 des Verschlussschiebers sind aus Kunststoff, vorzugsweise schlagfestem thermoplastischem Kunststoff, gebildet.

Die beiden Muffenrohrhälften 25 und 26 des inneren Muffenrohrs 15 sind prinzipiell gleich ausgebildet, weisen nämlich wie die Muffenrohrhälften 27 des äußeren Muffenrohrs 16 zwei etwa gleichgroße Halbzylinderschalen auf. An der Unterseite des Muffenrohrs 15 sind die Muffenrohrhälften 25 und 26 ebenfalls durch ein Scharnier, bei dem es sich im gezeigten Ausführungsbeispiel auch um ein in Längsrichtung des inneren Muffenrohrs 15 durchlaufendes Filmscharnier 35 handelt, verbunden. Das Filmscharnier 35 bildet eine Schwenkachse zum Auseinander- und Zusammenschwenken der Muffenrohrhälften 25 und 26. Im auseinander geschwenkten Zustand lässt sich das so in Längsrichtung offene Muffenrohr 15 um die Verbindungs- und Abzweigstelle zwischen dem Massekabel 11 und dem Abzweigkabel 12 herumlegen. Anschließend werden die Muffenrohrhälften 25 und 26 zusammengeschwenkt, wodurch das Muffenrohr 15 eine etwa zylindrische Gestalt erhält (Fig. 4).

Verschlossen wird das Muffenrohr 15 durch einen in Längsrichtung desselben durchgehend verlaufenden Rastverschluss 36. Der Rastverschluss 36 ist gebildet durch eine am oberen Längsrand der Muffenrohrhälfte 25 angeordnete und im Querschnitt etwa U-förmige Rastleiste 37 und eine damit korrespondierende Rastzunge 38 am gegenüberliegenden Längsrand der benachbarten Muffenrohrhälfte 26. Die beiden Muffenrohrhälften 25 und 26 werden zum Schließen des Muffenrohrs 15 so weit zusammengedrückt, dass die Rastzunge 38 in die Rastleiste 37 mindestens teilweise eingreift und durch Vorsprünge und Vertiefungen an der Rastleiste 37 und der Rastzunge 38 arretiert wird.

Die Abstandshalter 24 werden um das innere Muffenrohr 15 herumgelegt. Die gurtartigen Abstandshalter 24 sind vorzugsweise aus flexiblem Kunststoff gebildet, so dass sie sich leicht zum Herumlegen um das Muffenrohr 15 in eine zylindrische Gestalt bringen lassen. Die Abstandshalter 24 weisen an einem Ende einen zylindrischen Vorsprung 47 auf, der in eine dazu korrespondierende Durchgangsbohrung 48 im Mantel des inneren Muffenrohrs 15 eingesteckt wird. Durch eine gezielte Verteilung der Durchgangsbohrungen 48 auf die Länge des Muffenrohrs 15 wird die Anzahl und die Position der Abstandshalter 24 vorgegeben. Am gleichen Ende, an dem sich der Vorsprung 47 befindet, aber auf der gegenüberliegenden Seite, weist der Abstandshalter 24 einen leicht pilzartig ausgebildeten Einhakstift 49 auf. Hiermit korrespondiert eine Durchgangsbohrung 50 im gegenüberliegenden Endbereich des Abstandshalters 24. Die Durchgangsbohrung:50 ist so auf den Durchmesser des inneren Muffenrohrs 15 abgestimmt, dass der Abstandshalter 24 das Muffenrohr 15 stramm umgibt, wenn der Einhakstift 49 in die Durchgangsbohrung 50 hineingesteckt ist. Gegebenenfalls können am Abstandshalter 24 mehrere voneinander beabstandete Durchgangsbohrungen 50 vorgesehen sein, wodurch der Abstandshalter 24 im Durchmesser in gewisser Weise veränderbar ist, sich insbesondere für Übergangsmuffen 10 mit unterschiedlich großen Muffenrohren 15 verwenden lässt. Auf der nach dem Herumlegen um das innere Muffenrohr 15 äußeren Seite des gurtartigen Abstandshalters 24 befinden sich mehrere Vorsprünge 51. Diese Vorsprünge 51 liegen an der Innenseite des äußeren Mantelrohrs 16 an und führen dadurch die angestrebte Abstandshalterfunktion aus, indem sie das innere Muffenrohr 15 im Wesentlichen konzentrisch im äußeren Muffenrohr 16 fixieren. Zwischen manchen Vorsprüngen 51 weist der bandförmige Abstandshalter 24 an seiner Außenseite Haken 52 auf, die mit verhältnismäßig langen Schenkeln 53 versehen sind, die sich mit geringem Abstand zum gurtförmigen Abstandshalter 24 erstrecken (Fig. 4). Von einer Seite kann in einen Haken 52 eine flache Erdungslitze 43 teilweise eingeschoben werden, so dass diese größtenteils zwischen dem bandförmigen Grundkörper des Abstandshalters 24 und dem Schenkel 53 des Hakens 52 zu liegen kommt. Vorzugsweise verändert der Schenkel 53 zu seinem freien Ende 54 seinen Abstand zum bandförmigen Grundkörper des Abstandshalters 24, indem er geringer wird. Dadurch klemmt der Schenkel 53 die Erdungslitze 43 an der Außenseite des Abstandshalters 24 fest. Im gezeigten Ausführungsbeispiel verfügt der Abstandshalter 24 über mehrere Haken 52, die alternativ als Halter für die flache Erdungslitze 43 dienen.

Die Abstandshalter 24 können auch anders als dargestellt und vorstehend beschrieben ausgebildet sein. So können die Haken 52 zum Fixieren der Erdungslitze 43 fehlen. Ebenso sind Abstandshalter ohne Vorsprünge 47 denkbar. Dann können die Durchgangsbohrungen 48 im inneren Muffenrohr 15 entfallen. Die Verbindung der Enden des gurtartigen Abstandshalters zum Schließen desselben kann anders als beim gezeigten Abstandshalter 24 ausgebildet sein, beispielsweise durch eine variable Rastverbindung in der Art, wie sie bei Kabelverbindern bekannt ist, wodurch der Durchmesser des geschlossenen Gurts des Abstandshalters quasi stufenlos veränderbar ist zur Anpassung an unterschiedliche Durchmesser oder Durchmessertoleranzen des inneren Muffenrohrs 15.

Im vom inneren Muffenrohr 15 freigelassenen Bereich zwischen der Stirnseite 17 des äußeren Muffenrohrs 16 und der Stirnseite 19 des inneren Muffenrohrs 15 befindet sich ein freigelegter Bereich eines Bleimantels 39 des Massekabels 11 und (in Richtung zur Mitte der Übergangsmuffe 10) davor ein freigelegter Bereich einer Bewehrung 40 des Massekabels 11. In diesen Bereichen ist sowohl mit dem Bleimantel 39 als auch mit der Bewehrung 40 durch leitende, lösbare Befestigungen, bei denen es sich im gezeigten Ausführungsbeispiel um Rollfedern 41, 42 handelt, ein Ende eines Erdungsleiters, und zwar im gezeigten Ausführungsbeispiel einer flachen Erdungslitze 43, befestigt. Das betreffende Ende der Erdungslitze 43 ist U-förmig um eine erste Wendelung der Rollfeder 41 auf dem Bleimantel 39 herumgelegt, und zwar so, dass von der Rollfeder 41 der Endbereich der Erdungslitze 43 zur Bewehrung 40 läuft und auch hier U-förmig um eine erste Wendelung der Rollfeder 42 herumgeführt ist. Von der auf der Bewehrung 40 angeordneten außen liegenden Rollfeder 42 wird die Erdungslitze 43 außen am inneren Muffenrohr 15 entlang zur gegenüberliegenden linken Seite der Übergangsmuffe 10 (Fig. 1 und 2) geführt und in einem Haken 52 jedes Abstandshalters 24 festgeklemmt. Das gegenüberliegende Ende der Erdungslitze 43 ist auf der linken Seite der Übergangsmuffe 10 verbunden mit den Abschirmungen 44 aller drei Abzweigkabel 12. Dazu sind die Abschirmungen 44 der Abzweigkabel 12 im vom inneren Muffenrohr 15 freigelassenen Bereich auf der linken Seite des Muffengehäuses 14 zusammengeführt und miteinander verdrillt. An der Verdrillung der Abschirmungen 44 aller drei Abzweigkabel 12 ist ein metallisch leitender Kabelverbinder 45 befestigt. An diesem Kabelverbinder 45 ist auch das zu den Abzweigkabeln 12 weisende Ende der Erdungslitze 43 elektrisch leitend angeschlossen. Die Kabelverbinder 45 können auf der Verdrillungsstelle der Abschirmungen 44 und dem Ende der Erdungslitze 43 durch Schrauben oder Klemmen befestigt sein.

Der Außenseite des inneren Muffenrohrs 15 ist eine Abschirmung 46 zugeordnet. Die Abschirmung 46 erstreckt sich über die gesamte Außenseite des Muffenrohrs 15. Gebildet ist die Abschirmung 46 aus einem flexiblen Drahtgeflecht, das vorzugsweise gitterartig ausgebildet ist. Die Abschirmung 46 wird gebildet aus einer im Vergleich zur Länge des Muffenrohrs 15 schmalen Bahn eines Drahtgeflechts, die nach Art einer Bandage wendeförmig um den Außenmantel des Muffenrohrs 15 herumgewickelt wird und dabei mit bereichsweiser Überlappung der Ränder der Bahn sich über den gesamten Außenmantel des Muffenrohrs 15 erstreckt. Die Abschirmung 46 wird auch um in Längsrichtung außen am inneren Muffenrohr 15 entlanglaufende flache Erdungslitze 43 und die Abstandshalter 24 herumgewickelt, so dass die bandagenartige Abschirmung 46 die Erdungslitze 43 und die Abstandshalter 24 (letztere mindestensteilweise) von außen umgibt und dabei gleichzeitig die Erdungslitze 43 an der Außenseite des Muffenrohrs 15 fixiert. Auch gegenüberliegende Enden der um das innere Muffenrohr 15 bandagenartig herumgewickelte Abschirmung 46 werden auf dem Mantelrohr 15 fixiert, und zwar durch entsprechende Mittel, wobei es sich vorzugsweise um elastische Spannbänder aus Kunststoff handelt.

Dichtungen 18 an gegenüberliegenden Stirnseiten 17 des äußeren Mantelrohrs 16 sind so ausgebildet, dass sie an die Abmessungen und die Anzahl der Kabel, die durch die jeweilige Stirnseite 17 hindurchführbar sind, sich anpassen lasen. Im Bereich jeder Stirnseite 17 verfügt das äußere Muffenrohr 16 über einen innenseitig eingeklebten Dichtungsteil 55. Dieser Dichtungsteil 55 ist Bestandteil des Muffengehäuses 16, wobei das Dichtungsteil 55 an der Trennstelle der Muffenrohrhälften 27, also dort, wo das Muffenrohr 16 zur Montage aufgeklappt wird, unterbrochen ist. Jede Dichtung 18 verfügt außerdem über ein zweites Dichtungsteil 56, das um die Kabel, und zwar entweder das Massekabel 11 oder die Abzweigkabel 12, herumgewickelt wird, wobei das betreffende Dichtungsteil 56 Zwickel im Umfangsbereich der drei zusammen liegenden Abzweigkabel 12 ausfüllen. Das um die Kabel herumgelegte Dichtungsteil 56 weist einen Lappen auf, der sich im Bereich des Spalts 31 zwischen den oberen Längsrändern 29 der Muffenrohrhälften 27 erstreckt und auch diesen ausfüllt. Auch die Dichtungsteile 56 sind selbstklebend ausgebildet, wodurch sie nach dem Herumlegen um die Kabel sich hier fixieren lassen. Die Dichtungsteile 55 und 56 der Dichtungen 18 sind gebildet aus einem elastischen Material, das zumindest teilweise aus Schaumkunststoff gebildet ist; aber auch andere formbare und elastische Material für die Dichtungen 18 sind denkbar.

Alternativ können die Dichtungen 18 auch als Abdichtungstüllen ausgebildet sein. Diese sind vorzugsweise aus weichem Gummi oder anderem gummiartigen Material gebildet. Die Abdichtungstüllen weisen für jedes Kabel eine kegelstumpfförmige Kabeldichtung auf, die für jeden Kabeldurchmesser auf das betreffende Maß gebracht wird. Die Abdichtungstülle wird mit den kegelstumpfförmigen Kabeldichtungen über das Massekabel 11 oder die Abzweigungskabel 12 geschoben und anschließend ein den oder die Kabeldichtungen umgebender Rohrdichtteil der Abdichtungstülle von außen über die jeweilige Stirnseite 17 des äußeren Muffenrohrs 16 gestülpt.

Nachdem die Massekabel 11 und die Abzweigkabel 12 leitend verbunden worden sind, das innere Muffenrohr 15 um die Verbindungsstelle herumgelegt wurde, die Erdungslitze 43, die Abschirmung 44 und die Abstandshalter 24 montiert worden sind, erfolgt das Herumlegen des äußeren Mantelrohrs 16 um das innere Mantelrohr 15 und hierbei der dichtende Abschluss der gegenüberliegenden Stirnseiten 17 des äußeren Mantelrohrs 16 durch die Dichtungen 18 gegenüber den Kabeln. Es wird dann das mittige Verschlussoberteil 32 auf die Abwinklungen 30 an den Längsrändern 29 der Muffenrohrhälften 27 aufgerastet und dadurch die Muffenrohrhälften 27 des äußeren Muffenrohrs 16 in einem mittleren Bereich zusammengehalten. Außerdem werden die beiden äußeren Verschlussschieberteile 32 von jeder Stirnseite 17 auf die Abwinklungen 30 der Muffenrohrhälften 27 des Muffenrohrs 16 aufgeschoben, aber nur so weit, dass zwischen jeweils zwei benachbarten Verschlussschieberteilen 32 jeweils eine schmale Öffnung verbleibt. Durch die Öffnungen wird gegebenenfalls unter Zuhilfenahme eines Einfüllmittels, beispielsweise eines Trichters, fließfähiges Gießharz (nach dem Vermischen der Komponenten desselben) in das doppelwandige Muffengehäuse 14 eingegossen. Das Muffengehäuse 14 wird dazu so ausgerichtet, dass die Muffenrohre 15 und 16 horizontal verlaufen und die Verschlussschieberteile 32 mit den dazwischen freigelassenen Öffnungen nach oben weisen. Das flüssige Gießharz gelangt dann von oben in den Ringraum 23 zwischen den Muffenrohren 15 und 16. Das Gießharz fließt zu gegenüberliegenden Seiten des längeren äußeren Muffenrohrs 16 und tritt durch die offenen Stirnseiten des inneren Muffenrohrs 15 in dieses ein. Mindestens im oberen Bereich des inneren Muffenrohrs 15 sind Entlüftungsöffnungen 57 angeordnet. Durch diese kann Luft aus dem inneren Muffenrohr 15 entweichen, wenn über gegenüberliegende Stirnseiten 19 flüssiges Gießharz in das Innere des Muffenrohrs 15 einfließt. Es ist so gewährleistet, dass das Innere des Muffengehäuses 14, und zwar sowohl der Ringraum 23 zwischen den Muffengehäusen 15 und 16 als auch das gesamte Innere des inneren Muffenrohrs 15 und die vom inneren Muffenrohr 15 freigelassenen Endbereiche des äußeren Muffenrohrs 16 bis zu den Dichtungen 18 mit Gießharz gefüllt sind. Dabei verhindern die Dichtungen 18, dass das flüssige Gießharz vor dem Aushärten auch unter Druck aus den Stirnseiten 17 des äußeren Muffenrohrs 15 nicht austreten kann. Nach dem vollständigen Ausgießen des gesamten Inneren des Muffengehäuses 14 werden die äußeren Verschlussschieberteile 32 zum mittleren Verschlussschieberteil 32 zusammengeschoben und dadurch die zum Ausgießen des Inneren des Muffengehäuses 14 zunächst offen gelassenen Öffnungen verschlossen.

Bei der hier gezeigten Übergangsmuffe 10 ist etwa mittig im inneren Muffenrohr 15 ein sternartiger Abstandshalter 58 aus Kunststoff, insbesondere aus dem gleichen Material des später in das Muffengehäuse 14 einzufüllenden Gießharzes, zum Beispiel Polyurethan, angeordnet. Der Abstandshalter 58 ist so zwischen den gezeigten Ausführungsbeispiel drei Abzweigkabeln 12 angeordnet, dass er die Verbindungsstellen zum Massekabel 11 voneinander beabstandet und auf einem definierten Abstand hält, und zwar so, dass sich dieser Abstand beim Ausgießen des Muffengehäuses 14 nicht oder zumindest nicht nennenswert ändert. Dadurch ist sichergestellt, dass Gießmasse auch zwischen den Verbindungsstellen der drei Abzweigkabel 12 mit dem Massekabel 11 vorhanden ist. Dadurch, dass der Abstandshalter 58 aus dem gleichen Material des Gießharzes hergestellt ist, bildet er nach dem vollständigen Ausgießen des Muffengehäuses 14 eine homogene Einheit mit dem ausgehärteten Gießharz.

In prinzipiell gleicher Weise wie die zuvor beschriebenen Übergangsmuffe 10 können auch nicht gezeigte Verbindungsmuffen ausgebildet sein.

### Bezugszeichenliste:

- 10: Übergangsmuffe
- 11: Massekabel
- 12: Abzweigkabel
- 13: Verbindungsstelle
- 14: Muffengehäuse
- 15: Muffenrohr (innen)
- 16: Muffenrohr (außen)
- 17: Stirnseite
- 18: Dichtung
- 19: Stirnseite
- 20: Kabelverbinder
- 21: Leiter
- 22: Leiter
- 23: Ringraum
- 24: Abstandshalter
- 25: Muffenrohrhälfte
- 26: Muffenrohrhälfte
- 27: Muffenrohrhälfte
- 28: Filmscharnier
- 29: Längsrand
- 30: Abwinklung
- 31: Spalt
- 32: Verschlussschieberteil
- 33: Steg
- 34: Haken
- 35: Filmscharnier
- 36: Rastverschluss
- 37: Rastleiste
- 38: Rastzunge
- 39: Bleimantel
- 40: Bewehrung
- 41: Rollfeder
- 42: Rollfeder
- 43: Erdungslitze
- 44: Abschirmung
- 45: Kabelverbinder
- 46: Abschirmung
- 47: Vorsprung
- 48: Durchgangsbohrung
- 49: Einhakstift
- 50: Durchgangsbohrung
- 51: Vorsprung
- 52: Haken
- 53: Schenkel
- 54: freies Ende
- 55: Dichtungsteil
- 56: Dichtungsteil
- 57: Entlüftungsöffnung
- 58: Abstandshalter

## Patentansprüche

1. Kabelmuffe für Verbindungen, Abzweigungen oder dergleichen von elektrischen Kabeln, mit einem Muffengehäuse (14) und stirnseitigen Dichtungen (18) zwischen dem Muffengehäuse (14) und den Kabeln, **dadurch gekennzeichnet, dass** das Muffengehäuse (14) mehrwandig ausgebildet ist.

2. Kabelmuffe nach Anspruch 1, **dadurch gekennzeichnet, dass** das mehrwandige Muffengehäuse (14) aus mindestens zwei Muffenrohren (15, 16) unterschiedlicher Durchmesser gebildet ist, vorzugsweise ein im Durchmesser kleineres Muffenrohr (15), das im größeren Muffenrohr (16) angeordnet und vom letzteren vollständig umgeben ist.

3. Kabelmuffe nach einem der vorhergehenden Ansprüche, **dadurch gekennzeichnet, dass** das im Durchmesser kleinere (innere) Muffenrohr (15) kürzer ist als das im Durchmesser größere (äußere) Muffenrohr (16), wobei vorzugsweise jede Stirnseite (19) des inneren Muffenrohrs (15) gegenüber der jeweiligen Stirnseite (17) des äußeren Muffenrohrs (16) nach innen zurückversetzt ist, und insbesondere beide Stirnseiten (17) des äußeren Muffenrohrs (16) gegenüber den Kabeln abgedichtet sind, hingegen die Stirnseiten (19) des inneren Muffenrohrs (15) offen sind.

4. Kabelmuffe nach einem der vorhergehenden Ansprüche, **dadurch gekennzeichnet, dass** das innere Muffenrohr (15) etwa konzentrisch im äußeren Muffenrohr (16) gelagert ist, wobei zwischen den Muffenrohren (15, 16) ein umlaufender Spalt zur Bildung eines Ringraums (23) gebildet ist, wobei vorzugsweise zwischen den Muffenrohren (15, 16), insbesondere im Ringraum (23) zwischen den Muffenrohren (15, 16), mindestens ein Abstandshalter (24) angeordnet ist, der das innere Muffenrohr (15) etwa konzentrisch im äußeren Muffenrohr (16) hält.

5. Kabelmuffe nach einem der vorhergehenden Ansprüche, **dadurch gekennzeichnet, dass** die Abstandshalter (24) den umlaufenden Spalt zwischen den Muffenrohren (15, 16) nur teilweise ausfüllen.

6. Kabelmuffe nach einem der vorhergehenden Ansprüche, **dadurch gekennzeichnet, dass** mindestens eines der Muffenrohre (15, 16) aufklappbar ausgebildet ist, vorzugsweise beide Muffenrohre (15, 16) aus jeweils mindestens zwei Muffenrohrteilen (Muffenrohrhälften 25, 26; 27) gebildet sind, die durch in Längsrichtung der Muffenrohre (15, 16) verlaufende scharnierartige Mittel miteinander verbunden sind zum Verschwenken mindestens eines Muffenrohrteils jedes Muffenrohrs (15, 16) gegenüber mindestens einem anderen Muffenrohrteil des jeweiligen Muffenrohrs (15, 16).

7. Kabelmuffe nach einem der vorhergehenden Ansprüche, **dadurch gekennzeichnet, dass** benachbarte Längsränder (29) zweier Muffenrohrteile (Muffenrohrhälften 25, 26; 27) jedes Muffenrohrs (15, 16) ein lösbarer Verschluss zugeordnet ist, derart, dass bei geöffnetem Verschluss die Muffenrohre (15, 16) aufklappbar sind und ein in Längsrichtung der Muffenrohre (15, 16) durchgehender Schlitz zum Herumlegen des Muffenrohrs (15) um die Kabel bzw. zum Herumlegen des Muffenrohrs (16) um das Muffenrohr (15) bilden.

8. Kabelmuffe nach einem der vorhergehenden Ansprüche, **dadurch gekennzeichnet, dass** der lösbare Verschluss des äußeren Muffenrohres (16) derart teilverschließbar ausgebildet ist, dass er zwar die Muffenrohrteile zusammenhält, aber noch mindestens eine ausreichend große Öffnung zum Einfüllen fließfähiger Vergussmasse in das Muffengehäuse (14) offen lässt (Teilschließstellung) und nach dem vollständigen Ausgießen des Inneren des Muffengehäuses (14) mit Vergussmasse die oder jede Öffnung vom Verschluss schließbar ist.

9. Kabelmuffe nach einem der vorhergehenden Ansprüche, **dadurch gekennzeichnet, dass** mindestens das innere Muffenrohr (15) mit einer Abschirmung (44) versehen ist, wobei vorzugsweise die Abschirmung (44) aus zum Beispiel gitterartig geflochtenen Drähten der gesamten Außenseite des inneren Muffenrohrs (15) zugeordnet ist, insbesondere von außen um die ganze Mantelfläche des inneren Muffenrohrs (15) herumgewickelt ist.

10. Kabelmuffe nach einem der vorhergehenden Ansprüche, **dadurch gekennzeichnet, dass** mindestens einige elektrisch leitende, aber nicht zur Energieübertragung dienende Komponenten des oder jedes Kabels auf der einen Seite mit dem oder jedem Kabel auf der anderen Seite elektrisch leitend verbunden sind, vorzugsweise durch mindestens einen Erdungsleiter (Erdungslitze 43), und gegebenenfalls gegenüberliegende Enden des Erdungsleiters (Erdungslitze 43) lösbar mit elektrischen Abschirmungen und/oder Bewehrungen der Kabel elektrisch leitend verbunden sind.

11. Kabelmuffe nach einem der vorhergehenden Ansprüche, **dadurch gekennzeichnet, dass** der mindestens ein Erdungsleiter (Erdungslitze 43) durch den Ringraum (23) zwischen den Muffenrohren (15, 16) von einer Stirnseite (19) des inneren Muffenrohrs (15) zur gegenüberliegenden Stirnseite (19) des inneren Muffenrohrs (15) geführt ist, und/oder der Erdungsleiter (Erdungslitze 43) an der Außenseite des inneren Mantelrohrs (15) entlanggeführt und vorzugsweise von der das innere Mantelrohr (15) umgebenden Abschirmung (44) umgeben ist.

12. Kabelmuffe nach einem der vorhergehenden Ansprüche, **dadurch gekennzeichnet, dass** im Mantel des inneren Muffenrohrs (15) Löcher, insbesondere Entlüftungsöffnungen (57), angeordnet sind.
